# EUROPEAN PATENT APPLICATION

(11) **EP 4 815 238 A1**
(43) Date of publication of application: **30.09.2026**
(21) Application number: 26166424.7
(22) Date of filing: 20.03.2026
(51) Int. Cl.: H02J 3/00, G05B 13/04, G06N 3/08, G06Q 50/06, G05F 1/66, H02J 3/008, H02J 3/38, H02J 7/82

(54) **ADAPTIVE CONTROL OF GRID-SERVICE ENABLED EQUIPMENT WITH INTEGRATED ENERGY STORAGE**

(30) Priority: 28.03.2025 US 202563779594 P
(71) Applicant: Carrier Corporation, Palm Beach Gardens, FL 33418 (US); Viessmann Holding International GmbH, 35108 Allendorf (Eder) (DE)
(72) Inventor: The designation of the inventor has not yet been filed
(74) Representative: Dehns

(57) **Abstract**

According to embodiments, a cloud-native predictive control system includes a cloud-based, CB, controller (460) that includes a processor and a memory. The CB controller (460) is configured to perform CB controller operations that include electronically storing in the memory a grid-service schedule (550) that includes scheduled future energy storage device, ESD, tasks of an ESD (240, 240A). The ESD (240, 240A) is configured to selectively provide power to equipment. A predictive algorithm is executed to generate, based at least in part on a current ESD condition of the ESD (240, 240A), a predicted future ESD condition of the ESD (240, 240A). A first scheduled future ESD task is accessed from the scheduled future ESD tasks. Responsive to a determination by the predictive algorithm that the first scheduled future ESD task is in conflict with the predicted future ESD condition, a conflict resolution operation is executed.

## Description

### BACKGROUND

The embodiments described herein relate to control systems that manage high-density energy storage device (ESD) systems for grid-service enabled, high-energy-consumption equipment such as heating, ventilation and air conditioning (HVAC) systems.

Electrical energy drives a myriad of devices and equipment in commercial, industrial, and residential applications. For example, electrical energy drives lights, motors, household appliances, medical equipment, computers, air conditioning systems, electric vehicle charging stations and many other electrical devices. In most areas, power utilities generate and distribute electricity through an alternating current (AC) power grid. Shortages and/or increased costs associated with fossil fuels and electricity from power utilities significantly impact consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy. For example, a hurricane or an earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons. During these times of lost power, the sites may be unable to continue operations.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, and residential applications typically draw power from the power grid during times of peak demand, despite the higher costs associated with its generation.

Equipment that utilizes electrical energy can include or utilize components (e.g., electronic controllers) that manage various aspects of the equipment's energy consumption, including, for example, operational efficiency, environmental considerations, power-grid regulatory compliance, energy costs, and the like. Techniques for managing electric grid-sourced energy consumption are referred to generally as grid-services. A grid-service in the context of electric utility providers refers to any service or function that helps maintain the reliability, stability, and efficiency of the electrical grid. These services are often provided by energy producers, consumers, or distributed energy resources (DERs) such as solar panels, batteries (i.e., ESDs), wind turbines, and smart appliances, which can interact dynamically with the grid. Grid-services can be used to balance supply and demand, maintain power quality, and ensure that the grid operates smoothly under varying conditions.

DERs (e.g., solar panels, wind turbines, ESDs, and other distributed energy technologies) can be configured in a network referred to as a virtual power plant (VPP). The DERs in a VPP can be connected and managed through advanced software to function as a unified power generation facility. However, it is a challenge to implement VPPs that reduce the demand placed on traditional electric grid resources in an adaptive, reliable, and cost-effective manner.

### SUMMARY

According to embodiments, a cloud-native predictive control system includes a cloud-based (CB) controller that includes a processor and a memory. The CB controller is configured to perform CB controller operations that include electronically storing in the memory a grid-service schedule that includes scheduled future energy storage device (ESD) tasks of an ESD. The ESD is configured to selectively provide power to equipment. A predictive algorithm is executed to generate, based at least in part on a current ESD condition of the ESD, a predicted future ESD condition of the ESD. A first scheduled future ESD task is accessed from the scheduled future ESD tasks. Responsive to a determination by the predictive algorithm that the first scheduled future ESD task is in conflict with the predicted future ESD condition, a conflict resolution operation is executed.

Optionally, the cloud-native predictive control system may be part of a cloud computing system.

Optionally, the equipment and the ESD may be outside of the cloud computing system.

Optionally, the equipment may include an equipment-local (EL) controller configured to control the ESD.

Optionally, executing the conflict resolution operation includes the predictive algorithm generating an adjusted version of the first scheduled future ESD task.

Optionally, the EL controller may be configured to control the ESD to perform the adjusted version of the first scheduled future ESD task.

Optionally, the adjusted version of the first scheduled future ESD task may be configured to substantially avoid the conflict with the predicted future ESD condition.

Optionally, executing the conflict resolution operation may include the predictive algorithm generating an adjusted version of the predicted future ESD condition.

Optionally, the EL controller may be configured to control the ESD to implement the adjusted version of the predicted future ESD condition.

Optionally, the adjusted version of the predicted future ESD condition may be configured to substantially avoid the conflict with the first scheduled future ESD task.

Optionally, the CB controller operations may further include, responsive to receiving an ESD message including the current ESD condition, determining whether or not a message response condition is present under which a response to the ESD message is sent to the ESD.

Optionally, determining whether or not a message response condition is present may comprise the message response condition being present; and the message response condition being present may include the determination that the first scheduled future ESD task is in conflict with the predicted future ESD condition.

Optionally the predictive algorithm may include a rule-based algorithm.

Optionally, the predictive algorithm may include a cognitive algorithm.

According to embodiments, a computer-implemented method of operating a cloud-native predictive control system that includes a cloud-based (CB) controller is provided. The CB controller includes a processor and a memory. The computer-implemented method includes configuring the CB controller to perform CB controller operations that include electronically storing in the memory a grid-service schedule that includes scheduled future energy storage device (ESD) tasks of an ESD configured to selectively provide power to equipment. A predictive algorithm is executed to generate, based at least in part on a current ESD condition of the ESD, a predicted future ESD condition of the ESD. A first scheduled future ESD task is accessed from the scheduled future ESD tasks. Responsive to a determination by the predictive algorithm that the first scheduled future ESD task is in conflict with the predicted future ESD condition, a conflict resolution operation is executed.

Optionally, the cloud-native predictive control system may be part of a cloud computing system.

Optionally, the equipment and the ESD may be outside of the cloud computing system.

Optionally, the equipment may include an equipment-local (EL) controller configured to control the ESD.

Optionally, executing the conflict resolution operation may include the predictive algorithm generating an adjusted version of the first scheduled future ESD task.

Optionally, the EL controller may be configured to control the ESD to perform the adjusted version of the first scheduled future ESD task. The adjusted version of the first scheduled future ESD task may be configured to substantially avoid the conflict with the predicted future ESD condition.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

Embodiments of the present invention are illustrated by way of example and not limited in the accompanying figures in which like reference numerals indicate similar elements.
FIG. 1 depicts a non-limiting example of a system.
FIG. 2 depicts a non-limiting example implementation of a controller of the system shown in FIG. 1.
FIG. 3 depicts an ESD system.
FIG. 4 depicts a non-limiting example of a system.
FIG. 5A depicts a non-limiting example of a system.
FIG. 5B depicts a non-limiting example of a grid-service schedule.
FIG. 6A depicts a flow diagram illustrating a computer-implemented method.
FIG. 6B depicts a flow diagram illustrating a non-limiting example of how a portion of the computer-implemented method depicted in FIG. 6A can be implemented.
FIG. 7 depicts a flow diagram illustrating a computer-implemented method.
FIG. 8A illustrates training operations for generating a machine learning prediction/classification model.
FIG. 8B illustrates a machine learning prediction/classification model that results from the training operations depicted in FIG. 8A.
FIG. 9A depicts a machine learning system.
FIG. 9B depicts a learning phase that can be implemented by the machine learning system shown in FIG. 9A.
FIG. 10 depicts a computer system.

### DETAILED DESCRIPTION

Embodiments described herein relate to computer systems, computer-implemented methods, and computer program products configured to provide adaptable control of grid-service enabled, high-energy-consumption equipment. In one or more embodiments, the high-energy-consumption equipment includes a heat pump (HP) system. In one or more embodiments, the HP system includes and/or is associated with an energy storage device (ESD) system. In one or more embodiments, the adaptable controls are provided as a configuration of equipment-local and cloud-based (EL-CB) controllers. As used herein, a component described as EL is a component that is within or on a structure (e.g., a building), along with the plot of land on which the structure is located. As used herein, a component described as CB is a component that is a resource that is physically located in a data center that houses servers, storage devices and networking infrastructure necessary to provide cloud services. The EL-CB controllers and the associated HP/ESD system are configured to function as an adaptable VPP configured to support and/or execute grid-services. The grid-services performed by the adaptable VPP assist with maintaining the reliability, stability, and efficiency of the electrical grid by administering DERs (e.g., the ESD system) associated with the HP equipment/system. The adaptable VPP, and more specifically the EL-CB controllers, is "adaptable" in that it is configured such that it can accommodate changes in inputs, processes or outputs. The adaptable VPP, and more specifically the EL-CB controllers, is further "adaptable" in that it adjusts controller operations dynamically based on real-time data of the HP/ESD system and/or changing conditions of the HP/ESD system.

In one or more embodiments, the CB controllers of the EL-CB controllers are implemented as a cloud-native predictive control system. As a cloud-native system, the CB controllers are designed and built specifically to run in a cloud computing environment, thereby leveraging the cloud system's scalability, flexibility, and resilience. In an example configuration, the CB controllers can be implemented as a set of small, independent services (known as "microservices") that are configured to perform specific functions or sub-functions. Microservices communicate through an application programming interface (API), which is a set of rules or protocols that allows different software applications to communicate with each other, thereby enabling the different software applications to exchange data and functionalities by acting as a middle ground between applications. APIs are a way for developers to integrate features from one application into another without having to build everything from scratch. By using APIs, microservices are modular and easier to scale or update. Cloud-native features of the CB controllers can also incorporate containerization and/or Kubernetes technologies. Containerization technologies package components in so-called "containers" to ensure consistency across development, testing, and production environments. Containers ensure portability and efficient resource utilization. Kubernetes technologies are used to manage, deploy and orchestrate a system's services, thereby ensuring high availability and optimized resource allocation.

In one or more embodiments, a grid-service schedule associated with the grid-services performed by the HP/ESD system is not stored, managed, and/or updated by the EL controllers. Instead, the grid-service schedule associated with the grid-services performed by the HP/ESD system is stored, managed and/or updated at the CB controllers, and any HP/ESD grid-service tasks dictated by the grid-service schedule are transmitted, as needed, to the EL controller(s) by the CB controllers as messages. The transmitted messages contain instructions that control the HP/ESD system to perform the HP/ESD grid-service tasks. In a conventional implementation of a grid-service schedule, the original schedule can be provided once per day, and updates to the original schedule can be provided as frequently as one per hour. By storing, managing, and/or updating the grid-service schedule at the CB controllers, the data transmission expense (e.g., the number of transmitted data points, and the frequency of data transmissions) associated with transmitting the grid-service schedule and schedule updates to the HP/ESD system and/or the EL controller(s) is reduced. Additionally, conventional HP/ESD systems and/or the EL controller(s) lack the tools to handle the complexity of inserting, canceling and/or adapting the entries in a grid-service schedule. By implementing the CB controllers as a cloud-native predictive control system, the CB controllers are designed and built specifically to run in the cloud computing environment and leverage the cloud computing environment's scalability, flexibility, and resilience, thereby enabling the CB controllers to handle the complexity of inserting, canceling and/or adapting the entries in a grid-service schedule. Additionally, by implementing the CB controllers as a cloud-native predictive control system rather than incorporating the CB controller functionality into the EL controllers, controller code changes are easier to implement because it is easier to update code resident in cloud resources than push controller code changes to the push updated controller code to resources located at the HP/ESD system,

In one or more embodiments, the CB controller is configured to collect HP/ESD operational data in the form of machine-readable sensor outputs from the HP/ESD system on an ongoing, regular, periodic basis. The CB controller includes a predictive algorithm configured to use the machine-readable sensor outputs predict a predicted future HP/ESD condition. The CB controller extracts scheduled future HP/ESD tasks from the grid-services schedule and compares the machine-readable sensor outputs, the predicted future HP/ESD condition, and the scheduled future HP/ESD tasks to determine whether or not the predicted future HP/ESD condition is in conflict with the scheduled future HP/ESD tasks. For example, if the predicted future HP/ESD condition is that the HP/ESD system will need to undergo a maintenance operation from 7a.m. to 8a.m. Tuesday of this week, and if the scheduled future HP/ESD tasks is discharging stored energy as part of a dispatch event from 7a.m. to 8a.m. Tuesday of next week, a conflict exists because the HP/ESD system cannot discharge stored energy while the HP/ESD system is undergoing the maintenance operation. Responsive to the determination that the predicted future HP/ESD condition is in conflict with the scheduled future HP/ESD tasks, the CB controller is configured to execute a conflict resolution operation. In one or more embodiments, the conflict resolution operations can utilize a predictive algorithm configured to generate a conflict resolution that avoids the conflict. In some embodiments, the conflict resolution can involve a change to the predicted future HP/ESD condition alone, a change to the scheduled future HP/ESD tasks alone, and/or a change to the predicted future HP/ESD condition and the scheduled future HP/ESD tasks.

In some embodiments, the predictive algorithm is implemented as a rule-based algorithm. In some embodiments, the predictive algorithm is implemented as a cognitive algorithm.

Turning now to a more detailed description of embodiments of the disclosure, with current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant (VPP), generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors, and the like) to provide the air conditioning system with a level of dispatchability needed to interconnect with the electrical power grid.

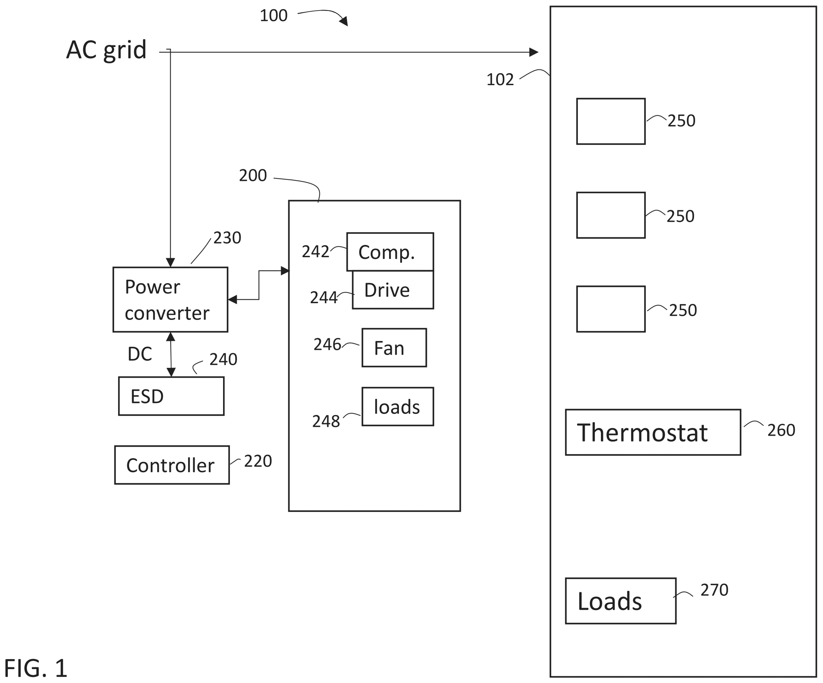

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an ESD 240. FIG. 1 is an example embodiment, and the location of components is not limited to the locations shown in FIG. 1. For example, the power converter 230, ESD 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, ESD 240 and controller 220 may be located in the first unit 200. One or more of the power converter 230, ESD 240 and controller 220 may be located adjacent to or outside the first unit 200. One or more of the power converter 230, ESD 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the disclosure.

The controller 220 may communicate with an air conditioning controller system controller and/or an ESD controller (e.g., a battery system management (BMS) system). In some embodiments, a single controller may implement all the functions of the controller 220, air conditioning controller and ESD controller. The controller 220 communicates with components of the described systems using wired and/or wireless connections, which are not illustrated in the drawings.

The system 100 of FIG. 1, and embodiments thereof described herein, allow for one or more components of the air conditioning system, to be powered solely by an AC power grid, powered solely by the ESD 240, and powered by both the AC power grid and the ESD 240, in conjunction. The one or more components of the air conditioning system include components in the first unit 200 and/or components in the second unit 250.

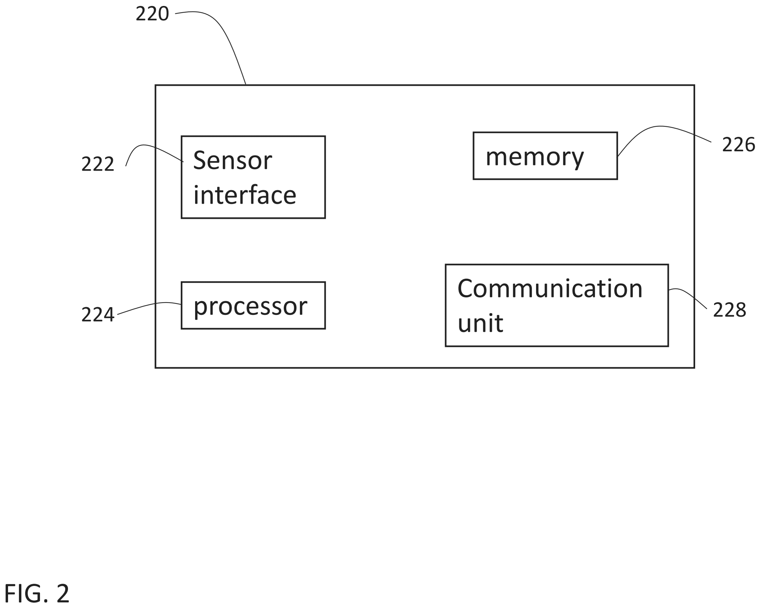

FIG. 2 depicts the controller 220 in accordance with one or more embodiments. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a computer readable storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring again to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230.

The ESD 240 is configured to provide, under certain circumstances, at least a portion of the power to operate one or more of components of the air conditioning system, such as the first unit 200, the second unit(s) 250,. The ESD 240 may be implemented using apparatus for storing electrical energy including one or more of, for example, a battery, battery cell holders/modules, battery cells, supercapacitor, etc. The battery implementation of the ESD 240 may include several cells in either modular form or as a stand-alone, multi-cell array. The battery implementation of the ESD 240 may be made of a single or multiple packaged self-contained systems, battery modules, battery cell holders, or individual cells. The battery implementation of the ESD 240, such as a complete plug and play battery, may include a box, wires, cells, and modules. For example, the battery implementation of the ESD 240 may include a group of cells configured into a self-contained mechanical and electrical unit. The ESD 240 may include other components (e.g., an ESD management system (ESD-MS)) that are electrically coupled to the ESD 240 and may be adapted to communicate directly or through the ESD-MS to controller 220. In battery implementations of the ESD 240, the ESD-MS can be referred to as a battery management system (BMS).

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler(s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

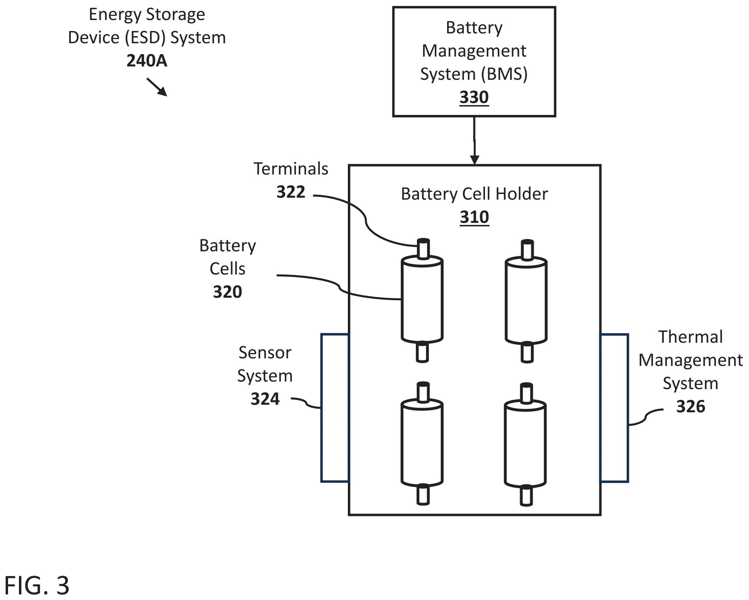

FIG. 3 depicts a non-limiting example of how the ESD 240 (shown in FIG. 1) can be implemented as an ESD system 240A in accordance with embodiments of the disclosure. In some embodiments, the ESD system 240A includes one or more instance of a battery cell holder 310. In some embodiments, the ESD system 240A includes one or more instances of the battery cell holder 310 and a BMS 330, configured and arranged as shown. The battery cell holder 310 includes a sensor system 324, a thermal management system 326, and one or more battery cells 320 having terminals 322. The terminals 322 of the battery cell 320 are the connection points (or ends) that allows electrical current to flow in and out of the battery cell 320. The battery terminals 322, often labeled as the positive (+) and negative (-) terminals, connect the battery cell 320 to an external circuit (e.g., one or more component of the system 100 shown in FIG. 1), thereby enabling the battery cell 320 to supply power to a device or be recharged. In some embodiments of the disclosure, the battery cells 320 can be implemented as high-energy-density batteries (e.g., lithium-ion batteries) used in high-power-consumption applications (e.g., HVAC systems) where battery safety, efficiency, and longevity are emphasized.

The sensor system 324 is configured to sense various operating states or conditions of the system 100 (shown in FIG. 1), including the battery cell holder 310 and its contents. The sensor system 324 is configured and arranged to detect specific physical phenomena throughout the system 100 (shown in FIG. 1) and convert the detected physical phenomenon into machine-readable data or information, often for measurement or monitoring purposes. The machine-readable data or information is designed to be understood by machines, thereby enabling efficient data exchange, storage, analysis and interpretation by computers or automated systems (e.g., the BMS 330) without requiring human intervention. The sensor system 324 generally includes a network of sensors, each of which includes a sensing element and a transducer. The sensing element is configured to detect the specific physical phenomenon (e.g., temperature, pressure, motion, and the like) and generate therefrom an interim signal. The transducer is configured to convert the interim signal to the machine-readable data or information, which is machine-readable sensor output.

The machine-readable data or information can be raw machine-readable data or information that require signal processing to improve its quality or usability. Such signal processing can include amplification to boost the signal strength for better readability; filtering to remove noise or irrelevant frequencies from the signal; and linearization that adjusts the signal to ensure that it corresponds linearly to the measured phenomenon. The machine-readable sensor output can be transmitted to a control unit, microcontroller, or data acquisition system (e.g., the BMS 330 shown in FIG. 3 and/or the controller 220 shown in FIGS. 1 and 2), where it can be further processed, displayed, or used to trigger actions. In some instances, the above-described functionality of the transducer can be incorporated into the control unit, microcontroller, or data acquisition system. In some instances, the above-described functionality of the control unit, microcontroller, or data acquisition system can be incorporated within the sensor to form a "smart" sensor. The network of sensors that form the sensor system 324 can be distributed at suitable locations throughout the monitored regions of the system 100 (shown in FIG. 1), including specifically the battery cell holder 310 (shown in FIG. 3).

The thermal management system 326 incorporates thermal management functionality in connection with the various battery cell operations controlled by the BMS 330. Battery cells 320, and particularly high-density batteries (e.g., lithium-ion batteries), generate heat during battery cell operations such as charging, discharging, and rapid cycling. Without proper cooling, excessive heat can build up within the battery cells 320 and lead to thermal runaway, where temperatures escalate uncontrollably. Excess heat can impact battery cell efficiency and reduce battery cell power output. In high-energy-consumption applications (e.g., the system 100 shown in FIG. 1), the battery cells 320 can discharge rapidly, thereby generating significant heat. Thermal management functionality helps maintain an optimal temperature range to ensure consistent battery performance in connection with the various battery cell operations controlled by the BMS 330. In embodiments of the disclosure where the battery cells 320 are lithium-ion battery cells, the battery cells 320 will operate over a wide temperature range (e.g., from about -40 degrees Celsius to about 60 degrees Celsius). However, to avoid performance degradation, the thermal management functionality can be used to maintain the battery cells 320 within a narrower temperature range (e.g., from about 15 degrees Celsius to about 35 degrees Celsius). For example, a lithium-ion battery cell operating at about 25 degree Celsius should expect about 6000 charge/discharge cycles of life. However, that same lithium-ion battery cell operating at about -20 degree Celsius should expect about 3000 charge/discharge cycles of life. In some embodiments, the thermal management system 326 is configured to implement a fluid-based thermal management technique in which a cooling or heating fluid is passed through the battery cell holder 310 to regulate the temperature of the battery cells 320.

The BMS 330 is electronically coupled to the battery cell holder 310, the battery cells 320, the sensor system 324, and the thermal management system 326. The BMS 330 is configured to perform multiple conventional battery cell control operations, including various aspects of charging and discharging the battery cells 320; battery cell voltage monitoring; battery cell current monitoring; battery cell overvoltage control; battery cell undervoltage control; battery cell state-of-charge (SOC) estimation; battery cell thermal management; and the like. The BMS 330 can be formed from many functional blocks including cutoff field effect transistors (FETs), a fuel gauge monitor, a cell voltage monitor, cell voltage balance, real time clock (RTC), temperature monitors, and a state machine. In some embodiments of the disclosure, the BMS 330 can be provided as an integrated circuit (IC). The grouping of the functional blocks in an IC-version of the BMS 330 varies widely from a simple analog front end that offers balancing and monitoring and requires a microcontroller (MCU), to a standalone, highly integrated BMS 330 that runs autonomously.

Each battery cell holder 310 includes one or more battery cell openings (not shown separately) configured to hold one or more battery cells 320. In some embodiments, each individual battery cell 320 can be implemented as a configuration of electrochemical cells. An electrochemical cell is a device that converts chemical energy into electrical energy (or vice versa) through redox (reduction-oxidation) reactions. Electrochemical cells are the building blocks of batteries and are widely used in applications ranging from small electronics to large power grids. Electrochemical cells can include two electrodes (e.g., an anode and a cathode), an electrolyte, and optionally a separator. In some embodiments of the disclosure, one or more of the battery cells 320 can be implemented as a high-density battery (e.g., a lithium-ion battery) used in high-energy-consumption applications (e.g., the system 100 shown in FIG. 1) where battery safety, efficiency, and longevity are emphasized. Although the battery cells 320 in the Figures are substantially cylindrical, embodiments apply to a variety of sizes and shapes of the battery cells 320 and their corresponding battery cell openings, including but not limited to prismatic-shapes, pouch-shapes, square-shapes, rectangular-shapes, and the like.

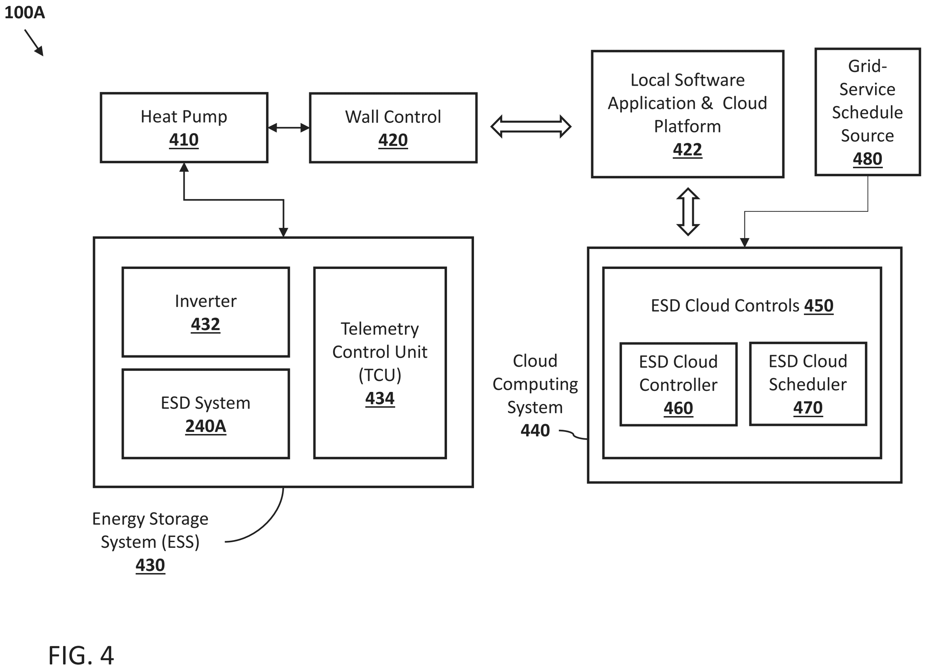

FIG. 4 depicts a system 100A in accordance with one or more embodiments. The system 100A, which is similar to the system 100 (shown in FIG. 1), includes components of an air conditioning system. As previously noted herein, the phrase "air conditioning" is intended to include one or more of heating, cooling, ventilation, humidification, dehumidification, refrigeration, hot water heating, chilling water or fluid, air filtration, and other known air processing operations, or a combination of any of the above. The system 100A focuses on an air conditioning system that includes a heat pump 410, a wall control 420, an energy storage system (ESS) 430, and ESD cloud controls 450, configured and arranged as shown. The heat pump 410, the wall control 420, and the ESS 430 are located locally. For example components that are located locally at the building 102 (shown in FIG. 1) would include components within or on the building 102, as well as components outside the building 102 but on the same plot of land on which the building 102 is located. The ESD cloud controls 450 are part of a remotely located cloud computing system 440. For example, a component that is remotely located from the building 102 and the plot of land on which the building 102 sits would be located any suitable away from of the building 102 and the plot of land on which the building 102 sits. The wall control unit 420 can include a local software application & cloud platform (LSA-CP) 422 configured to communicate with the cloud computing system 440. In some embodiments, an instance of the LSA-CP 422 can be resident on a separate computing device (not shown) including a smartphone, a personal computer, a tablet, a laptop, a personal digital assistant (PDA), and the like. In some embodiments, the separate computing device can be located locally or located remotely.

The various components/modules/models of the system 100A are depicted separately for ease of illustration and explanation. In embodiments of the disclosure, the functions performed by the various components/modules/models can be distributed differently than shown without departing from the scope of the various embodiments described herein unless it is specifically stated otherwise. Additionally, the various communications paths described in connection with the system 100A can be configured differently than shown and described without departing from the scope of the various embodiments described herein unless it is specifically stated otherwise. For example, in some embodiments, multiple components of the system 100A can include wireless communications functionality to transmit and receive data/information to and/or from the cloud computing system 440.

The heat pump 410 can be implemented in any suitable heat pump configuration. In a non-limiting example, the basic components of the heat pump 410 correspond to the basic components of the air conditioning system of the system 100 (shown in FIG. 1) and include, for example, a compressor, an evaporator, a condenser, expansion valves, a circulating refrigerant, optional reversing valves, fans, heat exchangers, and controllers. In some embodiments, the heat pump 410 includes phase change material (PCM) (not shown separately). PCM is a substance used in thermal systems to store and release large amounts of energy by undergoing a phase change, such as from solid to liquid or liquid to gas, at a specific temperature. In a heat pump system, PCM can play a role in enhancing energy efficiency and thermal performance by storing excess thermal energy generated by the heat pump when the system operates during off-peak periods or when demand is low. During high-demand periods, the stored energy can be released to help meet heating or cooling needs without overburdening the heat pump.

In some embodiments, the wall control 420 can be implemented as a thermostat (e.g., the thermostat 260 shown in FIG. 1). Like the thermostat 260, the wall control 420 provides a user interface for the system 100A, and allows the user to enter operational modes of the system 100A, including, for example, setpoints (the user-defined target temperature) for various zones of the system 100A. The wall control 420 of the heat pump 410 operates as a control device that monitors the ambient temperature and signals the heat pump 410 to heat, cool, or stay idle, depending on the setpoint.

In some embodiments, the wall control 420 can include sufficient computing resources to operate as a "smart" wall control 420 that stores and executes the LSA-CP 422. The local software application portion of the LSA-CP 422 provides software controls of the operations that control the heat pump 410. The cloud platform of the LSA-CP 422 includes a comprehensive software and/or hardware ecosystem that provides tools, services, and infrastructure to enable the management, optimization, and automation of the system 100A though the cloud computing system 440. The cloud platform of the LSA-CP 422 relies on the cloud computing system 440 to store, process, and analyze data, thereby enabling remote access and scalability without requiring on-premises hardware for data handling.

The ESS 430 includes the ESD system 240A, an inverter, 432, and a telemetry control unit (TCU) 434, configured and arranged as shown. In accordance with embodiments of the disclosure, the ESS 430, operating through the ESD system 240A, is configured to allow for one or more components of the system 100A, and other loads associated with the system 100A, to be powered solely by the AC power grid (shown in FIG. 1), powered substantially solely by the ESD system 240A, and/or powered by both the AC power grid and the ESD system 240A, in conjunction. The ESD system 240A includes the features and functionality of the ESD system 240A depicted in FIG. 3 and previously described herein. The inverter 432 is an implementation of the power converter 230 (shown in FIG. 1). Batteries (e.g., battery cells 320 shown in FIG. 3) store energy in direct current (DC) form, but most appliances, devices, and the power grid operate on alternating current (AC) electricity. The inverter 432 converts the DC electricity stored in the battery cells 320 of the ESD system 240A into AC electricity, which is required for most high-energy-consumption equipment such as the heat pump 410.

The TCU 434 includes communication modules, processors, and software for data handling and connectivity. The TCU 434 facilitates communication and data transmission between the equipment-local components of the overall system 100A (including the ESD system 240A) and cloud-based components of the overall system 100A (including the ESD cloud controls 450 of the cloud computing system 440). Functions of the TCU 434 include data logging, communication, remote diagnostics, and integration. Data logging collects operations data from the BMS 330 (shown in FIG. 3) and other systems. Communications transmits data to remote servers or control systems via wired or wireless protocols. Remote diagnostics enable remote monitoring, troubleshooting, and firmware updates. Integrations interfaces with other systems (e.g., cloud computing system 440) for telemetry and control.

The TCU 434 and the BMS 330 (shown in FIG. 3) can be configured to perform complimentary functions. The BMS 330 (through the sensor system 324) gathers real-time data from the ESD system 240A to manage the internal operations of the ESD system 240A, ensuring that it operates safely and efficiently. The TCU 434 acts as a bridge, communicating the status of the ESD system 240A (via the BMS 330) to external systems such as the cloud computing system 440 for monitoring, analytics, or control. In some embodiments, the BMS 330 and the TCU 434 functionalities can be combined into a single unit.

The ESD cloud controls 450 are incorporated within a cloud computing system 440. The ESD cloud controls 450 include an ESD cloud controller 460 and an ESD cloud scheduler 470. In accordance with embodiments of the disclosure, the ESD cloud controller 460 and the ESD cloud scheduler 470 operate collectively (or individually) as CB controllers, and the BMS 330 (shown in FIG. 3), the TCU 434, and the wall control 420 operate collectively (or individually) as EL controllers. The EL controllers and the CB controllers control the system 100A to function as an adaptable VPP configured to support and/or execute grid-services. The grid-services performed by the adaptable VPP assist with maintaining the reliability, stability, and efficiency of the electrical grid by controlling the ESD system 240A to function as a DER associated with the heat pump 410. The adaptable VPP, and more specifically the ESD cloud controls 450, is "adaptable" in that it is configured such that it can accommodate changes in inputs, processes or outputs. The adaptable VPP, and more specifically the ESD cloud controls 450, is further "adaptable" in that it adjusts controller operations dynamically based on real-time data of the system 100A and/or changing conditions of the system 100A.

In one or more embodiments, the ESD cloud controls 450 are implemented as a cloud-native predictive control system. As a cloud-native system, the ESD cloud controls 450 are designed and built specifically to run in the cloud computing system/environment 440, thereby leveraging the scalability, flexibility, and resilience of the cloud computing system 440.

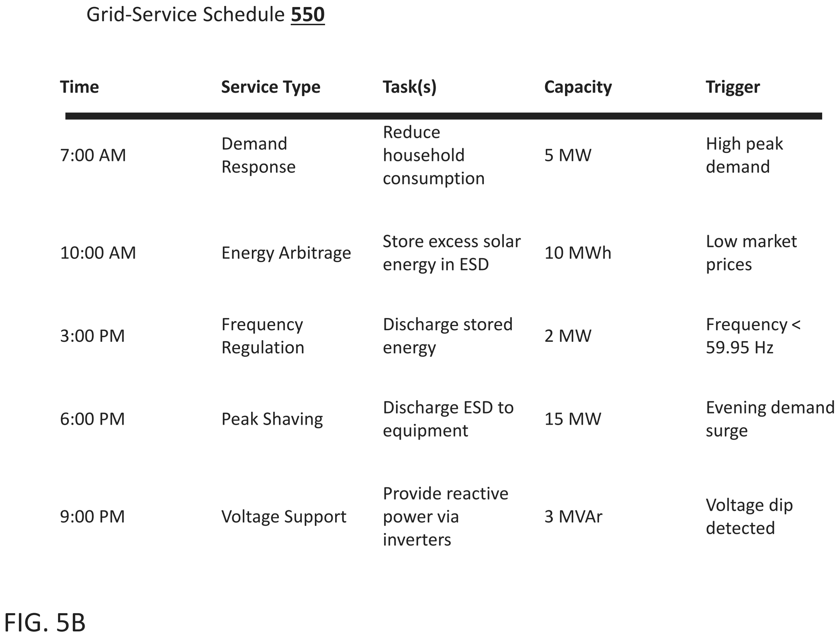

In one or more embodiments, a grid-service schedule source 480 is responsible for generating a grid-service schedule that defines scheduled future grid-service tasks to be performed by the system 100A. A non-limiting example grid-service schedule 550 is depicted in FIG. 5B and described in greater details subsequently herein. The grid-service schedule source 480 transmits the grid-service schedule through the ESD cloud controls 450 to the ESD cloud scheduler 470. The entity or source 480 that sends the grid-service schedule to the ESD cloud controls 450 can be a grid operator, utility provider, an aggregator, and the like. In some embodiments, the grid-service schedule can be processed through an energy management platform such as the cloud platform portion of the LSA-CP 422. In general, a grid operator, such as an independent system operator (ISO) or a regional transmission organization (RTO), manages the stability, reliability and balance of the electric grid. The grid operator sends the grid-service schedules and/or signals for demand response or ancillary services. These schedules instruct devices like the heat pump 410 and the ESS 430 to adjust energy consumption (reduce load, shift timing) during grid stress events. Aggregators act as intermediaries between the grid operator and DERs, such as the heat pump 410 and the ESD system 240A. Aggregators group multiple loads (e.g., multiple instances of the heat pump 410) into a VPP to provide grid-services. Energy management platforms can be implemented as a cloud-based energy management platforms (e.g., the cloud platform of the LSA-CP 422) configured to receive grid-service schedules or demand response requests from aggregators, utilities, or grid operators. The cloud-based energy management platform then communicates with the ESD cloud controls 450 to execute the grid-service schedule (e.g., adjusting temperature setpoints).

In accordance with embodiments of the disclosure, the grid-service schedule associated with the grid-services performed by the system 100A is not transmitted to, stored by, managed by, and/or updated by the EL controller(s), which are implemented as the BMS 330, the TCU 434, and/or the wall control 420. Instead, the grid-service schedule associated with the grid-services performed by the system 100A is stored by, managed by, and/or updated by the ESD cloud controls 450, and any grid-service tasks dictated by the grid-service schedule are transmitted by the ESD cloud controls 450 to the EL controller(s) (the BMS 330, the TCU 434, and/or the wall control 420), as needed. The grid-service tasks dictated by the grid-service schedule are transmitted in the form of messages that contain or initiate instructions that are necessary to enable the EL controller(s) to guide the system 100A (e.g., the ESS 430) to perform the grid-service task(s).

In a conventional implementation of a grid-service schedule, the grid-service schedule covers a particular time frame (e.g., 24 hours), the original schedule can be provided once per day, and updates to the original schedule can be provided as frequently as once per hour. By storing, managing, and/or updating the grid-service schedule at the ESD cloud controls 450, the data transmission expenses associated with transmitting the full grid-service schedule and grid-service schedule updates to the ESS 430 are avoided. In general, data transmission expenses are driven upward by increases in the number of transmitted data points, as well as increases in the frequency of data transmissions. Additionally, conventional high-energy-consumption equipment and/or EL controller(s) (the BMS 330, the TCU 434, and/or the wall control 420) lack the tools necessary to handle the complexity of inserting, canceling and/or adapting the entries of a grid-service schedule. By implementing the ESD cloud controls 450 (i.e., the CB controllers) as a cloud-native predictive control system, the ESD cloud controls 450 are designed and built specifically to run in and leverage the scalability, flexibility, and resilience of the cloud computing system/environment 440, thereby enabling the ESD cloud controls 450 to handle the complexity of inserting, canceling and/or adapting the entries in a grid-service schedule. Additionally, by implementing the grid-service related software operations in the ESD cloud controls 450 as a cloud-native predictive control system rather than incorporating the grid-service related software operations in the EL controllers, changes to the grid-service related software are easier to implement because it is easier to update code resident in cloud resources than it is to have to push grid-service related software code changes to resources located at the EL controller(s).

In one or more embodiments, in addition to receiving, storing, and managing the grid-service schedule, the CB controller(s) (e.g., the ESD cloud controller 460 and/or the ESD cloud scheduler 470) are also configured to receive operational data of the heat pump 410 and/or the ESS 430 transmitted to the CB controller(s), for example, through the wall control 420. The operational data is in the form of machine-readable sensor outputs from the sensor system 324 (shown in FIG. 3) generated on an ongoing, regular, periodic basis. The CB controller(s) include one or more predictive algorithms configured to evaluate the machine-readable sensor outputs to generate a predicted future state/condition of the heat pump 410 and/or the ESS 430. The CB controller extracts scheduled future grid-service tasks from the grid-services schedule and compares the machine-readable sensor outputs, the predicted future state/condition of the heat pump 410, the predicted future state/condition of the ESS 430, and the scheduled future grid-service tasks to determine whether or not the predicted future state/condition of the heat pump 410 and/or the predicted future state/condition of the ESS 430 are in conflict with one another.

For example, if the predicted future condition/state of the heat pump 410 is that the heat pump 410 will need to undergo a maintenance operation from 7a.m. to 8a.m. Tuesday of this week, and if the scheduled future grid-service tasks include discharging stored energy from the ESD system 240A as part of a frequency regulation service from 7a.m. to 8a.m. Tuesday of next week, a conflict exists because the heat pump 410 absorb discharged stored energy from the ESD system 240A while the heat pump 410 is undergoing the maintenance operation. Responsive to the determination that the predicted future state/ condition of the heat pump 410 is in conflict with the scheduled future grid-service tasks, the CB controller(s) (e.g., the ESD cloud controller 460) is configured to execute a conflict resolution operation. In one or more embodiments, the conflict resolution operations can utilize one or more predictive algorithms configured to generate a conflict resolution that avoids the predicted conflict. In one or more embodiments, the conflict resolution operations can utilize one or more predictive algorithms configured to generate a conflict resolution that will satisfy the scheduled future grid-service task while also satisfying the purpose or goal of the predicted future condition/state of the heat pump 410. For example, if the conflict resolution operations determine that the goals of the predicted need to apply the maintenance operation to the heat pump 410 from 7a.m. to 8a.m. Tuesday of this week can be satisfied by applying the maintenance operation to the heat pump 410 from 7a.m. to 8a.m. Monday of this week, the conflict resolution can be a shift of the predicted maintenance operation from 7a.m. to 8a.m. Tuesday of this week to 7a.m. to 8a.m. Monday of this week. The conflict resolution can further include notifying a maintenance system of the need to schedule the maintenance operation to occur from 7a.m. to 8a.m. Monday of this week. In some embodiments, the conflict resolution can involve a change to the predicted future state/condition alone, a change to the scheduled future grid-service tasks alone, and/or changes to both the predicted future state/condition and the scheduled future grid-service task(s) that are in conflict.

In some embodiments, the predictive algorithm is implemented as a rule-based algorithm. In some embodiments, the predictive algorithm is implemented as a cognitive algorithm. In some embodiments, the cognitive algorithm include neural network architectures configured to use language models to ingest, understand and generate natural language text.

In one or more embodiments, the system 100A is configured to limit communications that are transmitted from the ESD cloud controls 450 to one or more of the heat pump 410 and/or the ESS 430. In a conventional implementation of a high-energy-consumption piece of equipment that is controlled by cloud-based resources, there is a communications protocol in which substantially every message the high-energy-consumption piece of equipment sends to its cloud-based resources receives a response from the cloud-based resource. In one or more embodiments, the ESD cloud controls 450 are configured to only responds to a message received from the heat pump 410 and/or the ESS 430 based on results of the ESD cloud controls 450 performing a "response-needed" analysis. In one or more embodiments, the response-needed analysis performed by the ESD cloud controls 450 determines whether and when a response to a received message from the heat pump 410 and/or the ESS 430 is needed. In some embodiments, a response to a received message from the heat pump 410 and/or the ESS 430 is needed if the ESD cloud controls 450 determine that one or more of the received message indicates that a change in the operation of the ESS 430 is needed. The response to the received message from the heat pump 410 and/or the ESS 430 can includes an instruction to execute the change in the operation of the ESS 430, as well as determination of when the response needs to be transmitted. In some embodiments of the disclosure, the determination of when the response needs to be transmitted is based on when the response needs to be executed. For example, if the response is determined Monday at 9a.m., and the response needs to be executed at 9p.m. Tuesday, the response transmission can be delayed until a predetermined time before the response needs to be executed (e.g., 8:45 p.m. Tuesday). This delayed transmission allows the response and the response transmission time to be stored and potentially updated or avoided if a state/condition arises (e.g., a new instance of the previously-described conflict is identified) that requires a change in the stored response and/or the stored response transmission time.

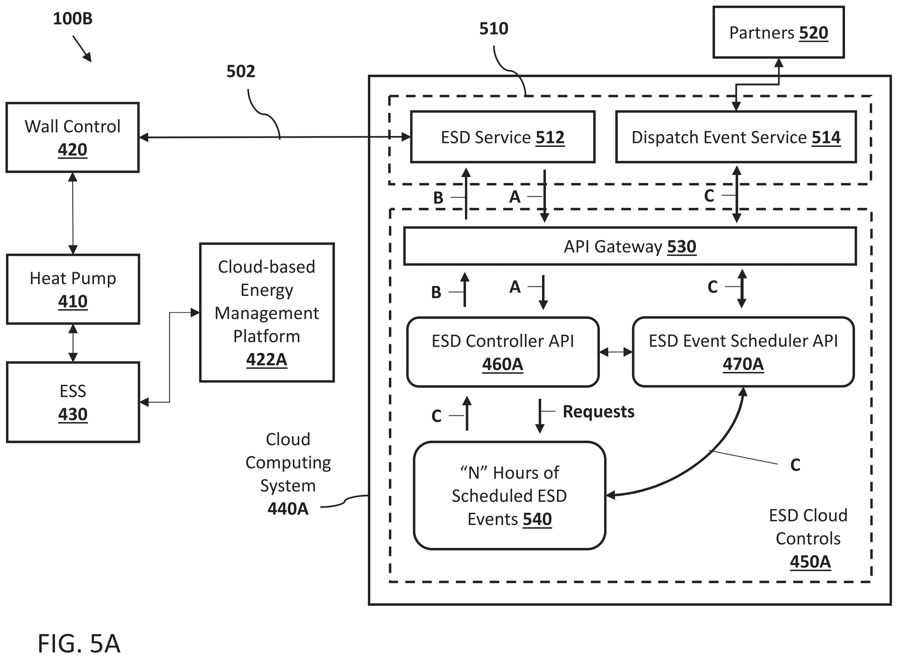

FIG. 5A depicts a system 100B in accordance with one or more embodiments. The system 100B, similar to the system 100 (shown in FIG. 1) and the system 100A (shown in FIG. 4), includes components of an air conditioning system. As previously noted herein, the phrase "air conditioning" is intended to include one or more of heating, cooling, ventilation, humidification, dehumidification, refrigeration, hot water heating, chilling water or fluid, air filtration, and other known air processing operations, or a combination of any of the above. Like the system 100A, the system 100B focuses on a type of air conditioning system that includes the heat pump 410, the wall control 420, and the ESS 430. The system 100B further includes a cloud-based energy management platform 422A and a cloud computing system 440A. The cloud-based energy management platform 422A is a more detailed, non-limiting example implementation of the LSA-CP 422 (shown in FIG. 4), and the cloud computing system 440A is a more detailed, non-limiting example implementation of the cloud computing system 440 (shown in FIG. 4). Because the system 100B includes substantially the same features and functionality as the system 100A, only selected portions of the system 100B will be described herein.

The various components/modules/models of the system 100B are depicted separately for ease of illustration and explanation. In embodiments of the disclosure, the functions performed by the various components/modules/models can be distributed differently than shown without departing from the scope of the various embodiments described herein unless it is specifically stated otherwise. Additionally, the various communications paths described in connection with the system 100B can be configured differently than shown and described without departing from the scope of the various embodiments described herein unless it is specifically stated otherwise. For example, in some embodiments, multiple components of the system 100B can include wireless communications functionality to transmit and receive data/information to and/or from the cloud computing system 440A.

Referring still to FIG. 5A, the cloud-based energy management platform 422A is a comprehensive software and/or hardware ecosystem that provides tools, services, and infrastructure to enable the management, optimization, and automation of energy generation and deliver to the system 100B. The term **"platform"** highlights the role of the cloud-based energy management platform 422A as a centralized system that integrates various components of the system 100B and facilitates interactions among them. The cloud-based energy management platform 422A serves as a **foundation or framework** that brings together hardware, software, and cloud-based technologies to manage energy systems more effectively by simplifying complex processes, enhancing user experience, and providing scalable solutions for energy efficiency and sustainability. A non-limiting example implementation of the cloud-based energy management platform 422A is a cloud-based energy platform that is commercially available from Carrier Global Corporation^{®} under the tradename "Viessmann Cloud."

The cloud computing system 440A includes a pre-processing module 510 and ESD cloud controls 450A, configured and arranged as shown. Various messages, designated as "A," "B," and "C," are depicted in FIG. 5A. "A" messages are messages related to sensed state/condition information of the system 100B. "B" messages are messages related to instructions that will be transmitted from the cloud computing system 440A to the ESS 430 and executed by the ESS 430. "C" messages are messages related to a grid-service schedule associated with the system 100B. The pre-processing module 510 includes an ESD service 512 and a dispatch event service 514. The ESD cloud controls 450A include an API gateway 530, an ESD controller API 460A and an ESD event scheduler API 470A. The ESD event scheduler API 470A provides a grid-service schedule in the form of "N" hours of scheduled ESD events 540. The "N" hours of scheduled ESD events 540 will be leveraged by various analysis processes performed by the ESD controller API 460A and the ESD event scheduler API 470A to generate the "B" messages.

In operation of the system 100B, machine-readable sensor outputs from the sensor system 324 (shown in FIG. 3) generate a wide variety of data/information about the state, condition, and/or operating parameters (i.e., state/condition information) of the system 100B, including specifically the heat pump 410 and the ESS 430. The machine-readable sensor outputs are converted to state/condition information and transmitted through the BMS 330 (shown in FIG. 3) and the TCU 434 (shown in FIG. 4) to the wall control 420. The state/condition information is transmitted (e.g., wirelessly) from the wall control 420 over a communications path 502 to the pre-processing module 510. In some embodiments, communications path 502 can pass or route through the cloud-based energy management platform 422A. In some embodiments, the state/condition information transmitted over the communications path 502 is transmitted using a message queuing telemetry transport (MQTT) protocol. MQTT is a communications protocol that provides simplicity, lightweight design, and reliability in constrained environments. MQTT uses a publish-subscribe model that enables efficient, scalable communication between devices and cloud services. The publish-subscribe protocol requires a central server, called a broker, to handle message distribution between clients. Devices can publish messages to topics without knowing the subscribers, and subscribers receive only the messages from topics to which they subscribe. In accordance with embodiments, the MQTT message protocol is more suitable for applications that prioritize maintaining the ability to pass messages in situations where the relevant devices can come in and out of connectivity.

The state/condition information of the system 100B that passes through the communications path 502 is ingested (e.g., using data translation processes to convert data/information into a form that is machine-readable) by the ESD service 512 and passed (e.g., as "A" messages) to the API gateway 530. The API gateway 530 provides an interface between pre-processing module 510 and the ESD controller API 460A and the ESD event scheduler API 470A. The API Gateway 530 is a server or software that acts as a single entry point for managing and routing API requests between clients (such as web or mobile applications) and backend services. It serves as a mediator, simplifying communication, enforcing policies, and enhancing security for APIs in a distributed architecture like microservices. In distributed systems, especially those using microservices, direct client-to-service communication can become complex and challenging to manage. The API Gateway 530 simplifies this by providing centralized management, decoupling functionality, and improved performance. Centralized management provides a unified place to enforce policies, monitor usage, and secure APIs. Decoupling functionality isolates clients from backend complexity, enabling independent evolution of client applications and services. Improved performance results from features like caching and load balancing configured to optimize resource usage and response times.

The API gateway 530 passes A messages to the ESD controller API 460A. In one or more embodiments, the ESD cloud controls 450A, and specifically the ESD controller API 460A and the ESD event scheduler API 470A, can be implemented as a set of small, independent services (known as "microservices") that are configured to perform specific functions or sub-functions. Microservices communicate through an API), which is a set of rules or protocols that allows different software applications to communicate with each other, thereby enabling the different software applications to exchange data and functionalities by acting as a middle ground between applications. APIs are a way for developers to integrate features from one application into another without having to build everything from scratch. By using APIs, microservices are modular and easier to scale or update. Cloud-native features of the ESD controller API 460A and/or the ESD event scheduler API 470A (i.e., CB controllers) can also incorporate containerization and/or Kubernetes technologies. Containerization technologies package components in so-called "containers" to ensure consistency across development, testing, and production environments. Containers ensure portability and efficient resource utilization. Kubernetes technologies are used to manage, deploy and orchestrate a system's services, thereby ensuring high availability and optimized resource allocation.

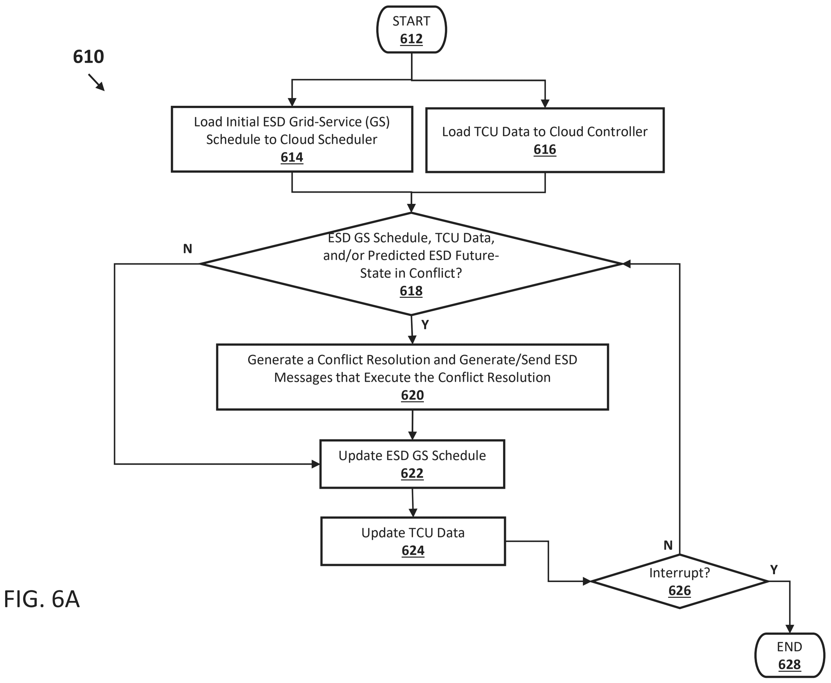

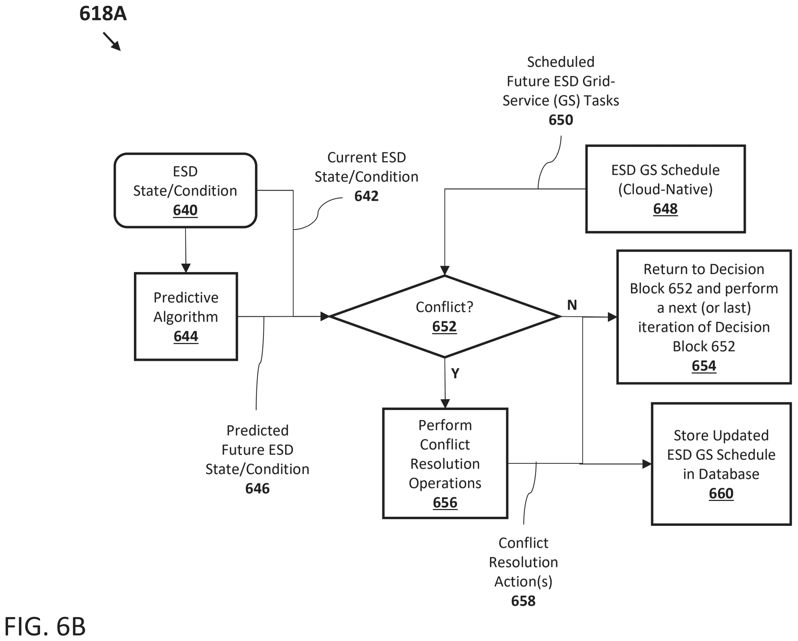

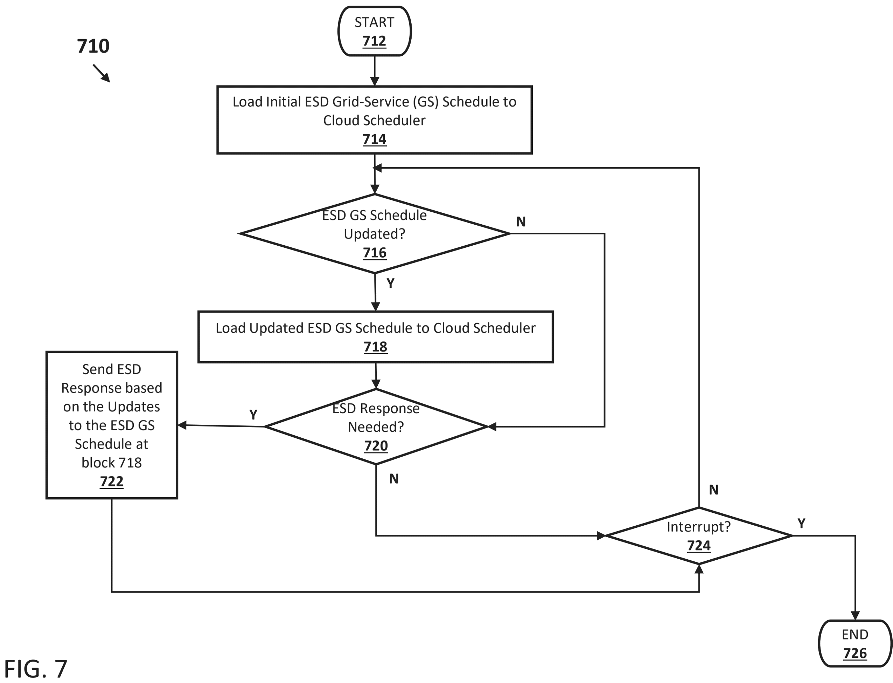

Responsive to state/condition information (i.e., the A messages) and information (i.e., "C" messages) extracted from the "N" hours of scheduled ESD events 540, the ESD controller API 460A creates ESD control messages ("B" messages) by working in tandem with the ESD event scheduler API 470A to compare and analyze the A messages, the C messages, and predicted future states/conditions of the system 100B in accordance with embodiments of the disclosure. Substantially in parallel with the A messages being passed from the ESD services 512 through the API gateway 530 to the ESD controller API 460A, a partner entity 520 periodically sends requests to dispatch power by placing API calls into a dispatch event service 514 of the pre-processing module 510. The partner entity 520 is a non-limiting example of how the grid-service schedule source 480 (shown in FIG. 4) can be implemented. The dispatch event service 514 ingests the API call, assesses it, and passes it as a C message through the API gateway 530 to the ESD event scheduler API 470A. The ESD event scheduler API 470A works in tandem with the ESD controller API 460A to assesses the ability of the ESS 430 to meet the energy dispatch request. Based at least in part on a result of the assessment of the ability of the ESS 430 to meet the energy dispatch request, the energy dispatch request can be refused, accepted, and/or modified using the architecture, control processes, and/or analysis processes in accordance with embodiments disclosed herein, including the control processes and/or analysis processes previously described in connection with the cloud computing system 440 of the system 100A. Additional details of the comparisons, control operations, and analyses performed by the systems 100A, 100B, including specifically the ESD controller API 460A and the ESD event scheduler API 470A, are depicted in FIGS. 6A, 6B, and 7 and described below.

FIG. 6A depicts a flow diagram illustrating a non-limiting example of a method 610 in accordance with aspects of the disclosure. The method 610 can be performed by the systems 100A, 100B based at least in part on machine-readable data or information gathered by the sensor system 324. In some embodiments, aspects of the method 610 can also be performed primarily by the cloud computing systems 440, 440A of the systems 100A, 100B (shown in FIG. 1). The method 610 starts at block 612 and moves to blocks 614, 616. At block 614, an initial version of a grid-service schedule (e.g., grid-service schedule 550 shown in FIG. 5B) is loaded to a cloud scheduler (e.g., the ESD cloud scheduler 470 and/or the ESD event scheduler API 470A). At block 616, TCU data (e.g., telemetry data gathered at the TCU 434) is loaded to a cloud controller (e.g., ESD cloud controller 460 and/or ESD controller API 460A).

The method 610 moves to decision block 618 to evaluate whether or not the ESD grid-service schedule, the TCU data, and/or predicted ESD future states are in conflict. FIG. 6B depicts a flow diagram illustrating a non-limiting example of how decision block 618 can be implemented using a method 618A. As shown in FIG. 6B, a continuous stream of ESD state/condition information 640 is provided to a predictive algorithm 644, and a current ESD state/condition 642 from the continuous stream of ESD state/condition information 640 is provided as an input to decision block 652. The predictive algorithm 644 uses the continuous stream of ESD state/condition information 640 to generate predicted future ESD state/condition 646 and provide the predicted future ESD state/condition 646 as an input to decision block 652. The ESD GS schedule 648 provides scheduled future ESD grid-service tasks 650 as an input to decision block 652.

Decision block 652 compares and analyzes the current ESD state/condition 642, the predicted future ESD state/condition 646, and the scheduled future ESD grid-service tasks 650 to determine whether any aspects of the current ESD state/condition 642, the predicted future ESD state/condition 646, and the scheduled future ESD grid-service tasks 650 are in conflict with one another. If the answer to the inquiry at decision block 652 is no, the method 618A returns to decision block 652 to perform another iteration of decision block 652. If the answer to the inquiry at decision block 652 is yes, the method 618A moves to block 656 to perform conflict resolution operations 656. The conflict resolution operations 656 are configured to further analyze the current ESD state/condition 642, the predicted future ESD state/condition 646, the scheduled future ESD grid-service tasks 650, and the aspects that are in conflict to determine one or more conflict resolution actions 658 that would resolve the conflict identified at block 652. In some embodiments, the outputs from block 656 are ranked and the highest ranked output from block 656 is sent downstream for further processing. The selected conflict resolution action 658 generated at block 656 is provided substantially in parallel to block 654 and block 660. At block 660, the conflict resolution action 658 is used to generate an updated version of the ESD GS schedule and store the same in a database of the system 100A, 100B. At block 654, the method 618A returns to decision block 652 and performs a next iteration of decision block 652. The method 618A ends after the last entry in the ESD GS schedule has been evaluated by the method 618A.

In embodiments, the database used to store the various versions of the ESD GS schedule can be implemented as a relational database configured to store both data/information, as well as the relationships between and among the stored data/information. A suitable relational database that can be used in connection with embodiments of the disclosure is any relational database configured to provide a means of storing related information in such a way that information and the relationships between information can be retrieved from it. Data in a relational database can be related according to common keys or concepts, and the ability to retrieve related data from a table is the basis for the term relational database. A suitable relational database for implementing aspects of the disclosure can be configured to include a relational database management system (RDBMS) that performs the tasks of determining the way data and other information are stored, maintained and retrieved from the relational database.

Returning to the method 610 in FIG. 6A, if the response to the inquiry at decision block 618 is yes, the method 610 moves to block 620 to perform operations that generate a conflict resolution (block 656 shown in FIG. 6B) and generate and send ESD messages that execute the conflict resolution (e.g., conflict resolution actions 658 shown in FIG. 6B). The operations at block 620 correspond to the operations at block 656, and the ESD message is configure to instruct the appropriate portions of the system 100A, 100B to perform the conflict resolution action(s) 658. From block 620, the method 610 moves to block 622 and checks to see whether any updates have been received from the grid-service schedule source 480 (shown in FIG. 4) and/or from the partner entity 520 (shown in FIG. 5A). From block 622, the method 610 moves to block 624 and checks to see whether any updates to the TCU data has been received at the cloud computing system/environment 440, 440A. From block 624, the method 610 moves to decision block 626 to determine whether or not an interrupt request has been received. If the response to the inquiry at decision block 626 is yes, the method 610 moves to block 628 and ends. If the response to the inquiry at decision block 626 is no, the method 610 moves to decision block 618 and performs another iteration of the evaluations at decision block 618 (and method 618A).

If the response to the inquiry at decision block 618 is no, the method 610 skips block 620 and moves to block 622 and checks to see whether any updates have been received from the grid-service schedule source 480 (shown in FIG. 4) and/or from the partner entity 520 (shown in FIG. 5A). From block 622, the method 610 moves to block 624 and checks to see whether any updates to the TCU data has been received at the cloud computing system/environment 440, 440A. From block 624, the method 610 moves to decision block 626 to determine whether or not an interrupt request has been received. If the response to the inquiry at decision block 626 is yes, the method 610 moves to block 628 and ends. If the response to the inquiry at decision block 626 is no, the method 610 moves to decision block 618 and performs another iteration of the evaluations at decision block 618 (and method 618A).

FIG. 7 depicts a flow diagram illustrating a non-limiting example of a method 710 in accordance with aspects of the disclosure. The method 710 can be performed by the systems 100A, 100B based at least in part on machine-readable data or information gathered by the sensor system 324. In some embodiments, aspects of the method 710 can also be performed primarily by the cloud computing systems 440, 440A of the systems 100A, 100B (shown in FIG. 1). The method 610 starts at block 712 and moves to blocks 714. At block 714, an initial version of a grid-service schedule (e.g., grid-service schedule 550 shown in FIG. 5B) is loaded to a cloud scheduler (e.g., the ESD cloud scheduler 470 and/or the ESD event scheduler API 470A).

The method 710 moves to decision block 716 to evaluate whether or not the ESD grid-service schedule has been updated (e.g., at block needs to be updated. The ESD grid-service schedule can need to be updated based on the need to accommodate a conflict resolution (e.g., block 660 shown in FIG. 6B) and/or the cloud computing system 440, 440A receiving an update to the ESD GS schedule from grid-service schedule source 480 and/or the partner entity 520 (e.g., block 622 shown in FIG. 6A). If the answer to the inquiry at decision block 716 is yes, the method 710 moves to block 718 and loads or stores an updated version of the ESD GS schedule to the cloud scheduler (e.g., the ESD cloud scheduler 470 and/or the ESD event scheduler API 470A shown in FIG. 5A).

From block 718, the method 710 moves to decision block 720 to evaluate whether or not an ESD response needs to be transmitted. In accordance with embodiments of the disclosure, the system 100A, 100B is configured to limit communications that are transmitted from the ESD cloud controls 450 to the ESS 430. In a conventional implementation of a high-energy-consumption piece of equipment that is controlled by cloud-based resources, there is a communications protocol in which substantially every message the high-energy-consumption piece of equipment sends to its cloud-based resources receives a response from the cloud-based resource. In one or more embodiments, the functionality represented by the evaluation at decision block 720 is configured to only responds to a message received from the heat pump 410 and/or the ESS 430 based on results of the ESD cloud controls 450, 450A performing a "response-needed" analysis. In one or more embodiments, the response-needed analysis performed by the ESD cloud controls 450, 450A determines whether and when a response to a received message from the heat pump 410 and/or the ESS 430 is needed. In some embodiments, a response to a received message from the heat pump 410 and/or the ESS 430 is needed if the ESD cloud controls 450, 450A determine that one or more of the received message indicates that a change in the operation of the ESS 430 is needed (e.g., a conflict resolution action 658 shown in FIG. 6B). The response to the received message from the heat pump 410 and/or the ESS 430 can includes an instruction to execute the change in the operation of the ESS 430, as well as determination of when the response needs to be transmitted. In some embodiments of the disclosure, the determination of when the response needs to be transmitted is based on when the response needs to be executed. For example, if the response is determined Monday at 9a.m., and the response needs to be executed at 9p.m. Tuesday, the response transmission can be delayed until a predetermined time before the response needs to be executed (e.g., 8:45 p.m. Tuesday). This delayed transmission allows the response and the response transmission time to be stored and potentially updated or avoided if a state/condition arises (e.g., a new instance of the previously-described conflict is identified) that requires a change in the stored response and/or the stored response transmission time.

If the answer to the inquiry at decision block 720 is no, the method 710 moves to decision block 724 to determine whether or not an interrupt request has been received. If the response to the inquiry at decision block 724 is yes, the method 710 moves to block 726 and ends. If the response to the inquiry at decision block 724 is no, the method 710 moves to decision block 716 and performs another iteration of the evaluations at decision block 716.

If the answer to the inquiry at decision block 720 is yes, the method 710 moves to block 722 and sends the appropriate ESD response, based on the updates to the ESD GS schedule at block 718. From block 722, the method 710 moves to decision block 724 to determine whether or not an interrupt request has been received. If the response to the inquiry at decision block 724 is yes, the method 710 moves to block 726 and ends. If the response to the inquiry at decision block 724 is no, the method 710 moves to decision block 716 and performs another iteration of the evaluations at decision block 716.

Returning to decision block 716, if the answer to the inquiry at decision block 716 is no, the method 710 skips block 718 and moves to decision block 720. Because the response to the inquiry at decision block 716 is no, the response to the inquiry at decision block 720 will also be no, and the method 710 moves to decision block 724 to determine whether or not an interrupt request has been received. If the response to the inquiry at decision block 724 is yes, the method 710 moves to block 726 and ends. If the response to the inquiry at decision block 724 is no, the method 710 moves to decision block 716 and performs another iteration of the evaluations at decision block 716.

In accordance with aspects of the disclosure, predictive algorithms can be used to perform the various comparison, analysis, and decision-making operations in the system 100A, 100B (e.g., decision block 618, predictive algorithm 644, decision block 652, block 656, decision block 720, block 722, and the like). In some embodiments, the predictive algorithm can be a rule-based algorithm configured to make decisions or performs actions based on a predefined set of rules, conditions, or "if-then" statements. In rule-based systems, experts or developers manually create a structured set of instructions that govern the algorithm's behavior in various scenarios (e.g., various combinations of grid-service-related conflicts and grid-service-related conflict resolution actions). These rules are typically simple, deterministic, and tailored to address specific tasks or situations.

In some embodiments of the disclosure, the predictive algorithm can be implemented as a cognitive algorithm. In embodiments of the disclosure, a cognitive algorithm refers to a variety of algorithm types that generate and apply computerized models to simulate the human thought process in complex situations where the answers might be ambiguous and uncertain. A cognitive algorithm includes self-learning technologies that use data mining, pattern recognition, natural language processing (NLP), and other related technologies to generate the mathematical models that make decisions (e.g., classifications, predictions, and the like) that, in effect, mimic human intelligence. In embodiments of the disclosure, the modifier "cognitive" as applied to components and functions described herein refers components and functions that utilize cognitive algorithms to generate results associated with the component or function. Non-limiting examples of a cognitive algorithms include artificial intelligence (AI) algorithms, NLP algorithms, natural language understanding (NLU) algorithms, language models (LMs), and similarity algorithms.

In its simplest form, AI is a field that combines computer science and robust datasets to enable problem-solving. AI also encompasses sub-fields of machine learning and deep learning. Machine learning and deep learning are implemented as neural networks (NNs) having input layers, hidden layers and output layers. Machine learning NNs differ from deep learning NNs in that deep learning has more hidden layers than machine learning. AI systems can be implemented as AI algorithms that seek to create expert systems configured to make predictions or classifications based on input data.

Components of the systems 100, 100A, 100B include the capability to communicate wirelessly. Suitable wireless communications strategies and techniques used herein can apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

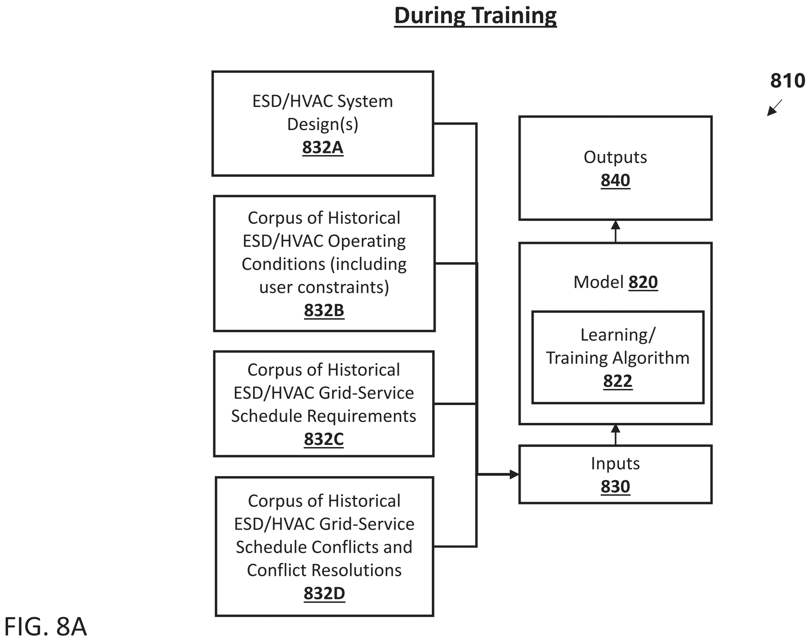

In some embodiments, the predictive algorithms are implemented as machine learning models trained to perform the various comparison, analysis, and decision-making operations in the system 100A, 100B (e.g., predictive algorithm 644, decision block 618, decision block 620, predictive algorithm 644, decision block 652, block 656, decision block 720, block 722, and the like). FIG. 8A depicts a simplified block diagram of a system 810 configured to train a model 820 to generate outputs 840, which are a classification or prediction responses to the various comparison, analysis, and decision-making operations in the system 100A, 100B (e.g., predictive algorithm 644, decision block 618, decision block 620, predictive algorithm 644, decision block 652, block 656, decision block 720, block 722, and the like).

As shown, the training operation performed by the system 810 includes supplying inputs 830 to the model 820, and applying a learning/training algorithm 822 to the inputs 830 to generate outputs 840. In accordance with embodiments of the disclosure, the inputs 830 during training are various forms of labeled or unlabeled training data (blocks 832A, 832B, 832C, 832D), the learning/training algorithm 822 is any suitable learning methodology for training the model 820, and the outputs 840 are the classifications and/or predictions generated by model 820 during training. In accordance with embodiments of the system 810, block 832A is training data on one or more ESD/HVAC system designs (including grid-service functionality) that are the same as or similar to the system 100A, 100B currently being implemented; block 832B is training data on a corpus of historical ESD/HVAC operating conditions (including user constraints) that are similar to the system 100A, 100B currently being implemented; block 832C is training data on a corpus of historical ESD/HVAC grid-service schedule requirements; and block 832D is training data on corpus of historical ESD/HVAC grid-service schedule conflicts and conflict resolutions..

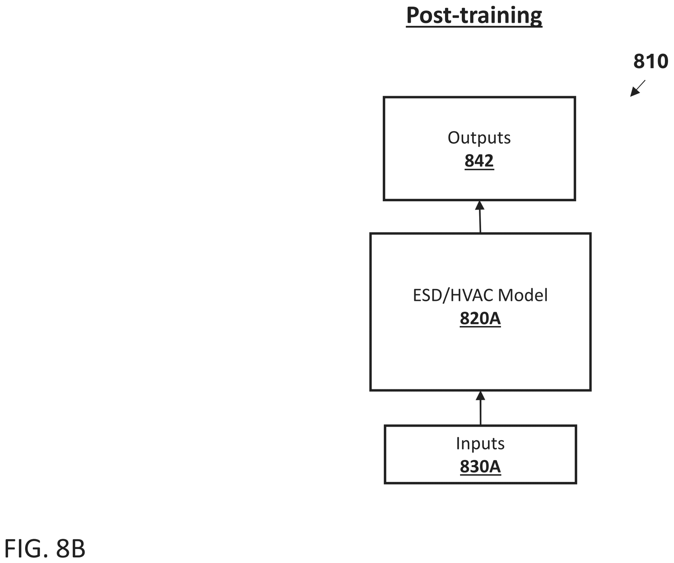

FIG. 8B depicts a machine learning model 820A, post-training, which is the model 820 (shown in FIG. 8A) after the training has been completed. The model 820A is obtained via performance of the training of FIG 8A and includes a machine learning prediction model configured to perform the various determinations described herein in accordance with embodiments of the disclosure. In response to inputs 830A (e.g., the current ESD state/condition 642, the predicted future ESD state/condition 646, the scheduled future ESD grid-service tasks 650, the aspects that are in conflict, etc.), the prediction model 820A generates outputs 842, which are predictions and or classifications.

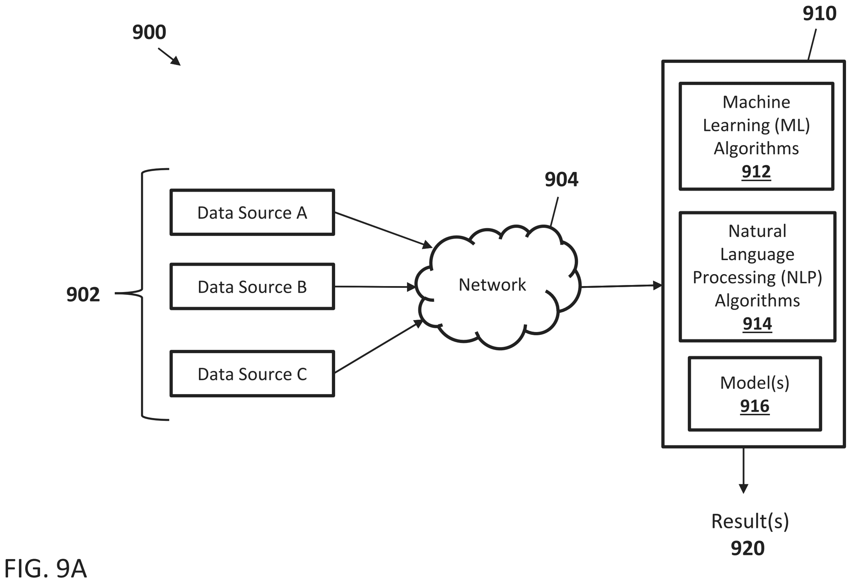

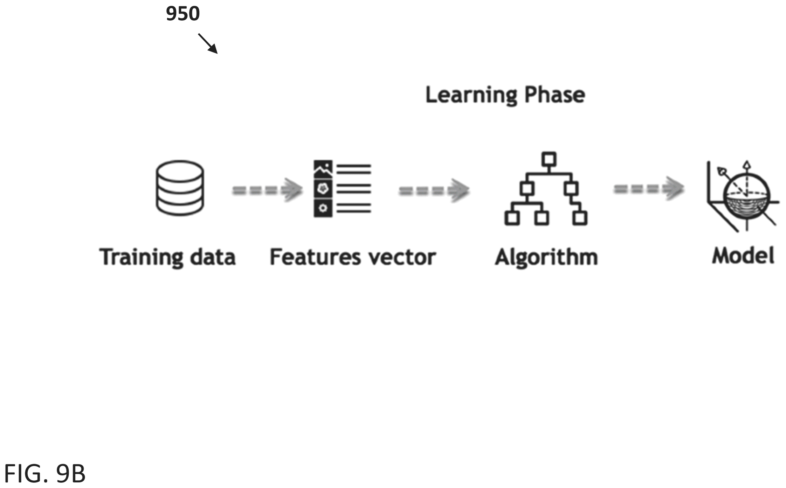

Additional details of example of machine learning techniques that can be used to implement aspects of the disclosure will be described with reference to FIGS. 9A and 9B. Machine learning models configured and arranged according to embodiments of the disclosure will be described with reference to FIG. 9A.

FIG. 9A depicts a block diagram showing a machine learning or classifier system 900 capable of implementing various aspects of the disclosure described herein. More specifically, the functionality of the system 900 is used in embodiments of the disclosure to generate various models and sub-models that can be used to implement computer functionality in embodiments of the disclosure. The system 900 includes multiple data sources 902 in communication through a network 904 with a classifier 910. In some aspects of the disclosure, the data sources 902 can bypass the network 904 and feed directly into the classifier 910. The data sources 902 provide data/information inputs that will be evaluated by the classifier 910 in accordance with embodiments of the disclosure. The data sources 902 also provide data/information inputs that can be used by the classifier 910 to train and/or update model(s) 916 created by the classifier 910. The data sources 902 can be implemented as a wide variety of data sources, including but not limited to, sensors configured to gather real time data, data repositories (including training data repositories), and outputs from other classifiers. The network 904 can be any type of communications network, including but not limited to local networks, wide area networks, private networks, the Internet, and the like.

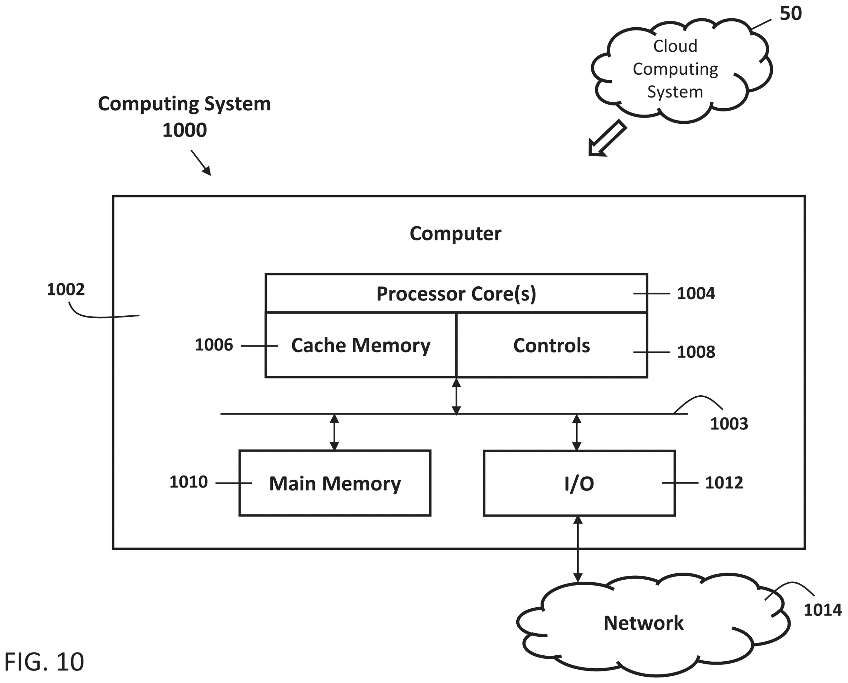

The classifier 910 can be implemented as algorithms executed by a programmable computer such as a computer system 1000 (shown in FIG. 10). As shown in FIG. 9A, the classifier 910 includes a suite of machine learning (ML) algorithms 912; natural language processing (NLP) algorithms 914; and model(s) 916 that are relationship (or prediction) algorithms generated (or learned) by the ML algorithms 912. The algorithms 912, 914, 916 of the classifier 910 are depicted separately for ease of illustration and explanation. In embodiments of the disclosure, the functions performed by the various algorithms 912, 914, 916 of the classifier 910 can be distributed differently than shown. For example, where the classifier 910 is configured to perform an overall task having sub-tasks, the suite of ML algorithms 912 can be segmented such that a portion of the ML algorithms 912 executes each sub-task and a portion of the ML algorithms 912 executes the overall task. Additionally, in some embodiments of the disclosure, the NLP algorithms 914 can be integrated within the ML algorithms 912.

The NLP algorithms 914 include speech recognition functionality that allows the classifier 910, and more specifically the ML algorithms 912, to receive natural language data (text and audio) and apply elements of language processing, information retrieval, and machine learning to derive meaning from the natural language inputs and potentially take action based on the derived meaning. The NLP algorithms 914 used in accordance with aspects of the disclosure can also include speech synthesis functionality that allows the classifier 910 to translate the result(s) 920 into natural language (text and audio) to communicate aspects of the result(s) 920 as natural language communications.

The NLP and ML algorithms 914, 912 receive and evaluate input data (i.e., training data and data-under-analysis) from the data sources 902. The ML algorithms 912 includes functionality that is necessary to interpret and utilize the input data's format. For example, where the data sources 902 include image data, the ML algorithms 912 can include visual recognition software configured to interpret image data. The ML algorithms 912 apply machine learning techniques to received training data (e.g., data received from one or more of the data sources 902) in order to, over time, create/train/update one or more models 916 that model the overall task and the sub-tasks that the classifier 910 is designed to complete.

Referring now to FIGS. 9A and 9B collectively, FIG. 9B depicts an example of a learning phase 950 performed by the ML algorithms 912 to generate the above-described models 916. In the learning phase 950, the classifier 910 extracts features from the training data and coverts the features to vector representations that can be recognized and analyzed by the ML algorithms 912. The features vectors are analyzed by the ML algorithm 912 to "classify" the training data against the target model (or the model's task) and uncover relationships between and among the classified training data. Examples of suitable implementations of the ML algorithms 912 include but are not limited to neural networks, support vector machines (SVMs), logistic regression, decision trees, hidden Markov Models (HMMs), etc. The learning or training performed by the ML algorithms 912 can be supervised, unsupervised, or a hybrid that includes aspects of supervised and unsupervised learning. Supervised learning is when training data is already available and classified/labeled. Unsupervised learning is when training data is not classified/labeled so must be developed through iterations of the classifier 910 and the ML algorithms 912. Unsupervised learning can utilize additional learning/training methods including, for example, clustering, anomaly detection, neural networks, deep learning, and the like.

When the models 916 are sufficiently trained by the ML algorithms 912, the data sources 902 that generate "real world" data are accessed, and the "real world" data is applied to the models 916 to generate usable versions of the results 920. In some embodiments of the disclosure, the results 920 can be fed back to the classifier 910 and used by the ML algorithms 912 as additional training data for updating and/or refining the models 916.

In aspects of the disclosure, the ML algorithms 912 and the models 916 can be configured to apply confidence levels (CLs) to various ones of their results/determinations (including the results 920) in order to improve the overall accuracy of the particular result/determination. When the ML algorithms 912 and/or the models 916 make a determination or generate a result for which the value of CL is below a predetermined threshold (TH) (i.e., CL < TH), the result/determination can be classified as having sufficiently low "confidence" to justify a conclusion that the determination/result is not valid, and this conclusion can be used to determine when, how, and/or if the determinations/results are handled in downstream processing. If CL > TH, the determination/result can be considered valid, and this conclusion can be used to determine when, how, and/or if the determinations/results are handled in downstream processing. Many different predetermined TH levels can be provided. The determinations/results with CL>TH can be ranked from the highest CL>TH to the lowest CL>TH in order to prioritize when, how, and/or if the determinations/results are handled in downstream processing.

In aspects of the disclosure, the classifier 910 can be configured to apply confidence levels (CLs) to the results 920. When the classifier 910 determines that a CL in the results 920 is below a predetermined threshold (TH) (i.e., CL < TH), the results 920 can be classified as sufficiently low to justify a classification of "no confidence" in the results 920. If CL > TH, the results 920 can be classified as sufficiently high to justify a determination that the results 920 are valid. Many different predetermined TH levels can be provided such that the results 920 with CL>TH can be ranked from the highest CL>TH to the lowest CL>TH.

FIG. 10 illustrates an example of a computer system 1000 that can be used to implement the computer-based components in accordance with aspects of the disclosure. The computer system 1000 includes an exemplary computing device ("computer") 1002 configured for performing various aspects of the electronic control operations described herein in accordance with aspects of the disclosure. In addition to computer 1002, the exemplary computer system 1000 includes network 1014, which connects computer 1002 to additional systems (not depicted) and can include one or more wide area networks (WANs) and/or local area networks (LANs) such as the Internet, intranet(s), and/or wireless communication network(s). Computer 1002 and additional system are in communication via network 1014, e.g., to communicate data between them.

Exemplary computer 1002 includes processor cores 1004, main memory ("memory") 1010, and input/output component(s) 1012, which are in communication via bus 1003. Processor cores 1004 include cache memory ("cache") 1006 and controls 1008, which include branch prediction structures and associated search, hit, detect and update logic, which will be described in more detail below. Cache 1006 can include multiple cache levels (not depicted) that are on or off-chip from processor 1004. Memory 1010 can include various data stored therein, e.g., instructions, software, routines, etc., which, e.g., can be transferred to/from cache 1006 by controls 1008 for execution by processor 1004. Input/output component(s) 1012 can include one or more components that facilitate local and/or remote input/output operations to/from computer 1002, such as a display, keyboard, modem, network adapter, etc. (not depicted).

A cloud computing system 50 is in wired or wireless electronic communication with the computer system 1000. The cloud computing system 50 can supplement, support or replace some or all of the functionality (in any combination) of the computer system 1000. Additionally, some or all of the functionality of the computer system 1000 can be implemented as a node of the cloud computing system 50.

For the sake of brevity, conventional techniques related to making and using aspects of the disclosure may or may not be described in detail herein. In particular, various aspects of computing systems and specific computer programs to implement the various technical features described herein are well known. Accordingly, in the interest of brevity, many conventional implementation details are only mentioned briefly herein or are omitted entirely without providing the well-known system and/or process details.

Similarly, conventional techniques related to device fabrication operations may or may not be described in detail herein. Moreover, the various tasks and process steps described herein can be incorporated into a more comprehensive procedure or process having additional steps or functionality not described in detail herein. In particular, various steps in the manufacture of devices described herein are well known and so, in the interest of brevity, many conventional steps will only be mentioned briefly herein or will be omitted entirely without providing the well-known process details.

Some functional units of the systems described in this specification can be implemented as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the invention, unless it is specifically stated otherwise.

Various embodiments are described herein with reference to the related drawings. Alternative embodiments can be derived without departing from the scope of the invention. Various connections and positional relationships (e.g., over, below, adjacent, etc.) are set forth between elements in the following description and in the drawings. These connections and/or positional relationships, unless specified otherwise, can be direct or indirect, and the invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

In some embodiments, various functions or acts can take place at a given location and/or in connection with the operation of one or more apparatuses or systems. In some embodiments, a portion of a given function or act can be performed at a first device or location, and the remainder of the function or act can be performed at one or more additional devices or locations.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e., one, two, three, four, etc. The terms "a plurality" are understood to include any integer number greater than or equal to two, i.e., two, three, four, five, etc. The term "connection" can include both an indirect "connection" and a direct "connection."

The terms "about," "substantially," "approximately," and variations thereof, are intended to include the degree of error associated with measurement of the particular quantity based upon the equipment available at the time of filing the application. For example, "about" can include a range of ± 8% or 5%, or 2% of a given value. Additionally, the terms "about," "substantially," "approximately," and variations thereof, refer to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

Each computer, controller or other processor-based component identified herein can be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein can be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

Aspects of the disclosure can be embodied as a system, a method, and/or a computer program product at any possible technical detail level of integration. The computer program product can include a computer readable storage medium (or media) having computer readable program instructions thereon for causing a processor to carry out aspects of the present disclosure.

## Claims

1. A cloud-native predictive control system comprising a cloud-based, CB, controller (460), wherein the CB controller comprises a processor and a memory, and wherein the CB controller is configured to perform CB controller operations comprising:
electronically storing in the memory a grid-service schedule (550) comprising scheduled future energy storage device, ESD, tasks of an ESD (240, 240A), wherein the ESD is configured to selectively provide power to equipment;
executing a predictive algorithm to generate, based at least in part on a current ESD condition of the ESD, a predicted future ESD condition of the ESD;
accessing from the scheduled future ESD tasks a first scheduled future ESD task; and
responsive to a determination by the predictive algorithm that the first scheduled future ESD task is in conflict with the predicted future ESD condition, executing a conflict resolution operation.

2. The cloud-native predictive control system of claim 1, wherein the cloud-native predictive control system is part of a cloud computing system (440), and optionally wherein the equipment and the ESD are outside of the cloud computing system.

3. The cloud-native predictive control system of claim 2, wherein the equipment comprises an equipment-local, EL, controller configured to control the ESD.

4. The cloud-native predictive control system of claim 3, wherein executing the conflict resolution operation comprises the predictive algorithm generating an adjusted version of the first scheduled future ESD task.

5. The cloud-native predictive control system of claim 4, wherein the EL controller is configured to control the ESD to perform the adjusted version of the first scheduled future ESD task, and optionally wherein the adjusted version of the first scheduled future ESD task is configured to substantially avoid the conflict with the predicted future ESD condition.

6. The cloud-native predictive control system of claim 3, 4 or 5, wherein executing the conflict resolution operation comprises the predictive algorithm generating an adjusted version of the predicted future ESD condition.

7. The cloud-native predictive control system of claim 6, wherein the EL controller is configured to control the ESD to implement the adjusted version of the predicted future ESD condition, and optionally wherein the adjusted version of the predicted future ESD condition is configured to substantially avoid the conflict with the first scheduled future ESD task.

8. The cloud-native predictive control system of claim , 3, 4, 5 or 6, wherein the CB controller operations further comprise, responsive to receiving an ESD message comprising the current ESD condition, determining whether or not a message response condition is present under which a response to the ESD message is sent to the ESD.

9. The cloud-native predictive control system of claim 8, wherein:
determining whether or not a message response condition is present comprises the message response condition being present; and
the message response condition being present comprises the determination that the first scheduled future ESD task is in conflict with the predicted future ESD condition..

10. The cloud-native predictive control system of any of claims 3 to 9, wherein the predictive algorithm comprises a rule-based algorithm or a cognitive algorithm.

11. A computer-implemented method of operating a cloud-native predictive control system comprising a cloud-based, CB, controller (460), wherein the CB controller comprises a processor and a memory, and wherein the computer-implemented method comprises configuring the CB controller to perform CB controller operations comprising:
electronically storing in the memory a grid-service schedule (550) comprising scheduled future energy storage device, ESD, tasks of an ESD (240, 240A), wherein the ESD is configured to selectively provide power to equipment;
executing a predictive algorithm to generate, based at least in part on a current ESD condition of the ESD, a predicted future ESD condition of the ESD;
accessing from the scheduled future ESD tasks a first scheduled future ESD task; and
responsive to a determination by the predictive algorithm that the first scheduled future ESD task is in conflict with the predicted future ESD condition, executing a conflict resolution operation.

12. The computer-implemented method of claim 11, wherein the cloud-native predictive control system is part of a cloud computing system, and optionally wherein the equipment and the ESD are outside of the cloud computing system.

13. The computer-implemented method of claim 12, wherein the equipment comprises an equipment-local, EL, controller configured to control the ESD.

14. The computer-implemented method of claim 13, wherein executing the conflict resolution operation comprises the predictive algorithm generating an adjusted version of the first scheduled future ESD task.

15. The computer-implemented method of claim 14, wherein:
the EL controller is configured to control the ESD to perform the adjusted version of the first scheduled future ESD task; and
the adjusted version of the first scheduled future ESD task is configured to substantially avoid the conflict with the predicted future ESD condition.
